# EUROPEAN PATENT SPECIFICATION

(11) **EP 1 183 828 B1**
(45) Date of publication and mention of the grant of the patent: **08.03.2006**
(21) Application number: 00935995.1
(22) Date of filing: 16.05.2000
(51) Int. Cl.: H04L 12/44, H04L 29/06

(54) **FABRIC ROUTER WITH FLIT CACHING**
FLIT-CACHE IN EINEM PAKETVERMITTELNDEM ROUTER
ROUTEUR DE MATRICE AVEC FONCTION D'ANTEMEMOIRE DE SEGMENTS FLITS

(30) Priority: 21.05.1999 US 316699
(43) Date of publication of application: 06.03.2002
(73) Proprietor: Avici Systems, North Billerica, MA 01862-1256 (US)
(72) Inventor: DALLY, William, J., Stanford, CA 94305 (US); CARVEY, Philip, P., Bedford, MA 01730 (US); KING, P., Allen, Needham, MA 02192 (US); MANN, William, F., Sudbury, MA 01776 (US); DENNISON, Larry, R., Norwood, MA 02062 (US)
(74) Representative: Driver, Virginia Rozanne
(86) International application number: PCT/US2000/013467
(87) International publication number: WO 2000/072530

(56) References cited:
- EP-A- 0 886 454
- WO-A-98/36534

## Description

### BACKGROUND OF THE INVENTION

An interconnection network consists of a set of nodes connected by channels. Such networks are used to transport data packets between nodes. They are used, for example, in multicomputers, multiprocessors, and network switches and routers. In multicomputers, they carry messages between processing nodes. In multiprocessors, they carry memory requests from processing nodes to memory nodes and responses in the reverse direction. In network switches and routers, they carry packets from input line cards to output line cards. For example, published International application PCT/US98/16762 (WO99/11033), by William J. Dally, Philip P. Carvey, Larry R. Dermison and P. Allen King, and entitled "Router With Virtual Channel Allocation,"
describes the use of a three-dimensional torus interconnection network to provide the switching fabric for an internet router.

A key issue in the design of Interconnection networks is the management of the buffer storage in the nodes or fabric routers that make up the interconnection fabric. Many prior routers, including that described in the noted pending PCT patent application, manage these buffers using virtual-channel flow control as described in "Virtual Channel Flow Control," by William J. Dally, IEEE Transactions on Parallel and Distributed Systems, Vol. 3, No. 2, March 1992, pp. 194-205. With this method, the buffer space associated with each channel is partitioned and each partition is associated with a virtual channel. Each packet traversing the channel is assigned to a particular virtual channel and does not compete for buffer space with packets traversing other virtual channels.

Recently routers with hundreds of virtual channels have been constructed to provide isolation between different classes of traffic directed to different destinations. With these routers, the amount of space required to hold the virtual channel buffers becomes an issue. The number of buffers, N, must be large to provide isolation between many traffic classes. At the same time, the size of each buffer, S, must be large to provide good throughput for a single virtual channel. The total input buffer size is the product of these two terms T = N x S. For a router with N = 512 virtual channels and S =4 flits, each of 576 bits, the total buffer space required is 2048 flits or 1,179,648 bits. The buffers required for the seven input channels on a router of the type described in the above patent application take more than 7Mbits of storage.

These storage requirements make it infeasible to implement single-chip fabric routers with large numbers of large virtual charmel buffers in present VLSI technology which is limited to about 1Mbit per router ASIC chip. In the past this has been addressed by either having a smaller number of virtual channels, which can lead to buffer interference between different traffic classes, by making each virtual channel small (often one flit in size) which leads to poor performance on a single virtual channel, or by dividing the router across several ASIC chips which increases cost and complexity.

WO 98/36534 discloses a split-queue architecture and method of queuing entries to the queue has a three part queue. The first part of the queue is a write side in which entries to the queue are received. The second part of the queue is a read side from which entries exist the queue after flowing through the queue. Entries normally flow from the write side to the read side. An overflow area, located off-chip in an external memory, forms part of the queue on an as needed basis to store entries from the write side when the read side no longer has capacity to accept more entries from the write side. When the read side regains capacity to accept more entries, the overflow area transfers its entries to the read side.

EP 0886454 discloses a relatively small FIFO queue is located on a semiconduetor chip receiving and transmitting data in a computer system, typically a computer network. The FIFO queue has additional storage capability in the form of an expansion into the local memory of the computer system. The front and back ends of the FIFO, which are involved in receiving and transmitting data, are implemented on the chip. The FIFO expands into the space provided in the local memory only when the on-chip portion of the FIFO is full. The middle portion of the FIFO resides in expansion in the local memory. The local memory is accessed only in bursts of multiple credits, both for read transactions and for write transactions.

### SUMMARY OF THE INVENTION

The present invention provides a router including buffers for information units transferred through the router, the router comprising a first set of rapidly accessible buffers for the information units and a second set of buffers for the information units that are accessed more slowly than the first set; characterized by:
each information unit received at a port being stored in a buffer assigned to only one of plural virtual channels;
the rapidly accessible buffers being shared by multiple virtual channels by dynamic assignment to virtual channels, the number of rapidly accessible buffers being substantially less than the number of buffers required for all virtual channels; and
the number of buffers in the second set of buffers assigned to virtual channels being substantially greater than the available number of rapidly accessible buffers.

In a further aspect, the present invention provides a method of buffering information units in a router, comprising storing the information units in a first set of rapidly accessible buffers and a second set of buffers that are accessed more slowly than the first set, characterized by:
each information unit received at a port being stored in a buffer assigned to only one of plural virtual channels;
the readily accessible buffers being shared by multiple virtual channels by dynamic assignment to virtual channels, the number of rapidly accessible buffers being substantially less than the number of buffers required for all virtual channels; and overflow from the first set of buffers being stored in the second set of buffers, the number of buffers in the second set assigned to virtual channels being substantially greater than the available number of rapidly accessible buffers.

In a further aspect, the present invention provides a network comprising a plurality of interconnected routers, each router including information unit buffers, the router comprising a first set of rapidly accessible information unit buffers and a second set of information unit buffers that are accessed more slowly than the first set, characterized by:
each information unit received at a port being stored in a buffer assigned to only one of plural virtual channels;
the readily accessible buffers being shared by multiple virtual channels by dynamic assignment to virtual channels, the number of rapidly accessible buffers being substantially less than the number of buffers required for all virtual channels; and
the number of buffers in the second set of buffers assigned to virtual channels being substantially greater than the available number of rapidly accessible buffers.

The present invention overcomes the storage limitations of prior-art routers by providing a small pool of on-chip flit-buffers that are used as a cache and overflowing any flits that do not fit into this pool to off-chip storage. Our simulation studies show that while buffer isolation is required to guarantee traffic isolation, in practice only a tiny fraction of the buffers are typically occupied. Thus, most of the time all active virtual channels fit in the cache and the external memory is rarely accessed.

Thus, in accordance with the present invention, a router includes buffers for information units such as flits transferred through the router. The buffers include a first set of rapidly accessible buffers for the information units and a second set of buffers for the information units that are accessed more slowly than the first set.

In the preferred embodiment, the fabric router is implemented on one or more integrated circuit chips. The first set of buffers is located on the router integrated circuit chips, and the second set of buffers is located on memory chips separate from the router integrated circuit ships. The second set of buffers may hold information units for a complete set of virtual units.

In one embodiment, the first set of buffers comprises a buffer pool and a pointer array. The buffer pool is shared by virtual channels, and the array of pointers points to information units, associated with individual channels, within the buffer pool.

In another embodiment, the first set of buffers is organized as a set associative cache. Specifically, each entry in the set associative cache may contain a single information unit or it may contain the buffers and state for an entire virtual channel.

Flow control may be provided to stop the arrival of new information units while transferring information units between the first set of buffers and the second set of buffers. The flow control may be blocking or credit based.

Miss status registers may hold the information units waiting for access to the second set of buffers. An eviction buffer may hold entries staged for transfer from the first set of buffers to the second set of buffers.

Applications of the invention include a multicomputer interconnection network, a network switch or router, and a fabric router within an internet router.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
Figure 1 illustrates an internet configuration of routers to which the present invention may be applied.
Figure 2 illustrates a three-dimensional fabric forming a router of Figure 1.
Figure 3 illustrates a fabric router used in the embodiment of Figure 2.
Figure 4 illustrates a set of input buffers previously provided in the fabric router of figure 3.
Figure 5 illustrates an input buffer array in accordance with one embodiment of the invention.
Figure 6 illustrates the pointer array and buffer pool of Figure 5 in greater detail.
Figure 7 illustrates a specific entry in the pointer array of Figure 6.
Figure 8 illustrates another embodiment of the invention in which the input buffer array is organized as a set associative cache with each entry containing a single flit.
Figure 9 illustrates a third embodiment of the invention in which the input buffer array is organized as a set associative cache in which each entry contains the flit buffers and state for an entire virtual channel.
Figure 10 presents simulation channel occupancy histograms.

### DETAILED DESCRIPTION OF THE INVENTION

Although the present invention is applicable to any router application, including those in multicomputers, multiprocessors, and network switches and routers, it will be described relative to a fabric router within an internet router. Such routers are presented in the above-mentioned PCT application.

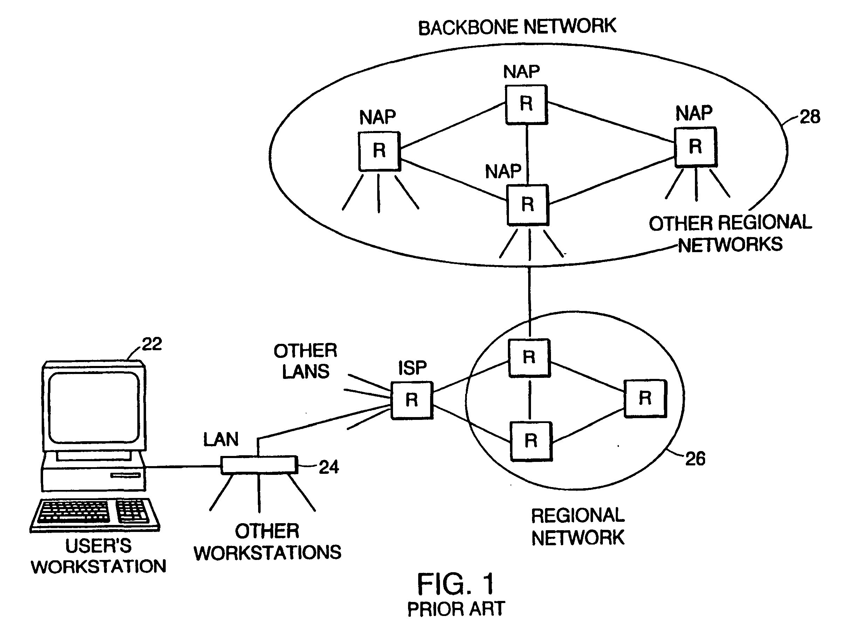

As illustrated in Figure 1, the Internet is arranged as a hierarchy of networks. A typical end-user has a workstation 22 connected to a local-area network or LAN 24. To allow users on the LAN to access the rest of the intemet, the LAN is connected via a router R to a regional network 26 that is maintained and operated by a Regional Network Provider or RNP. The connection is often made through an Internet Service Provider or ISP. To access other regions, the regional network connects to the backbone network 28 at a Network Access Point (NAP). The NAPs are usually located only in major cities.

The network is made up of links and routers. In the network backbone, the links are usually fiber optic communication channels operating using the SONET (synchronous optical network) protocol. SONET links operate at a variety of data rates ranging from OC-3 (155Mb/s) to OC-192 (9.9Gb/s). These links, sometimes called trunks, move data from one point to another, often over considerable distances.

Routers connect a group of links together and perform two functions: forwarding and routing. A data packet arriving on one link of a router is forwarded by sending it out on a different link depending on its eventual destination and the state of the output links. To compute the output link for a given packet, the router participates in a routing protocol where all of the routers on the Internet exchange information about the connectivity of the network and compute routing tables based on this information.

Most prior art Internet routers are based on a common bus or a crossbar switch. Typically, a given SONET link 30 is connected to a line-interface module. This module extracts the packets from the incoming SONET stream. For each incoming packet, the line interface reads the packet header, and using this information, determines the output port (or ports) to which the packet is to be forwarded. To forward the packet, a communication path within the router is arbitrated, and the packet is transmitted to an output line interface module. The module subsequently transmits the packet on an outgoing SONET link to the next hop on the route to its destination.

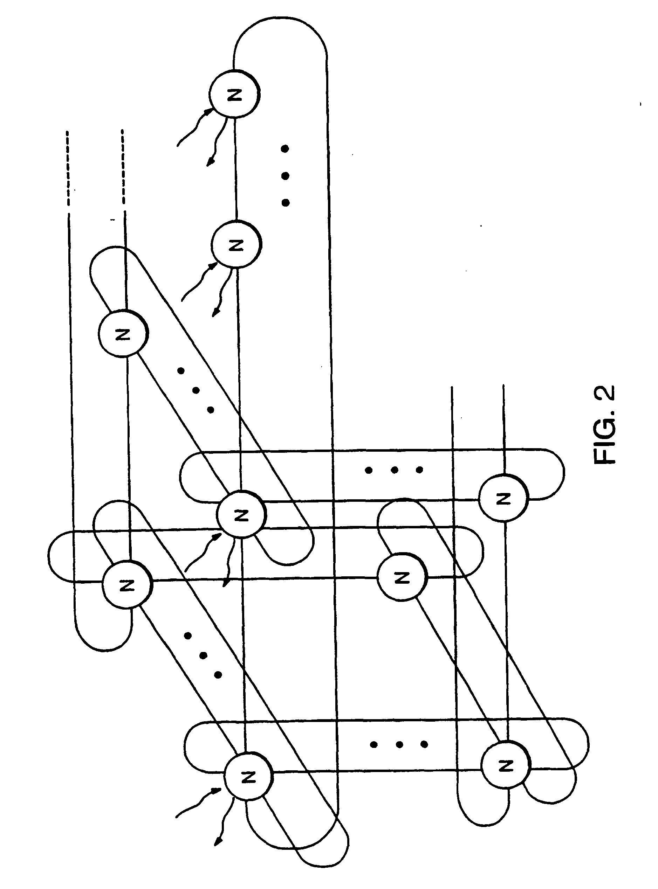

The router of the above mentioned international application overcomes the bandwidth and scalability limitations of prior-art bus- and crossbar- based routers by using a multi-hop interconnection network as a router, in particular a 3-dimensional torus network illustrated in Figure 2. With this arrangement, each router in the wide-area backbone network in effect contains a small in-cabinet network. To avoid confusion we will refer to the small network internal to each router as the switching fabric and the routers and links within this network as the fabric routers and fabric links.

In the 3-dimensional torus switching fabric of nodes illustrated in Figure 2, each node N comprises a line interface module that connects to incoming and outgoing SONET internet links. Each of these line-interface nodes contains a switch-fabric router that includes fabric links to its six neighboring nodes in the torus. IP packets that arrive over one SONET link, say on node A, are examined to determine the SONET link on which they should leave the internet router, say node B, and are then forwarded from A to B via the 3-D torus switch fabric.

Typical packets forwarded through the internet range from 50 bytes to 1.5 Kbytes. For transfer through the fabric network of the internet router of the present invention, the packets are divided into segments, or flits, each of 36 bytes. At least the header included in the first flit of a packet is modified for control of data transfer through the fabric of the router. In the preferred router, the data is transferred through the fabric in accordance with a wormhole routing protocol.

Flits of a packet flow through the fabric in a virtual network comprising a set of buffers. One or more buffers for each virtual network are provided on each node in the fabric. Each buffer is sized to hold at least one flow-control digit or flit of a message. The virtual networks all share the single set of physical channels between the nodes of the real fabric network, and a fair arbitration policy is used to multiplex the use of the physical channels over the competing virtual networks.

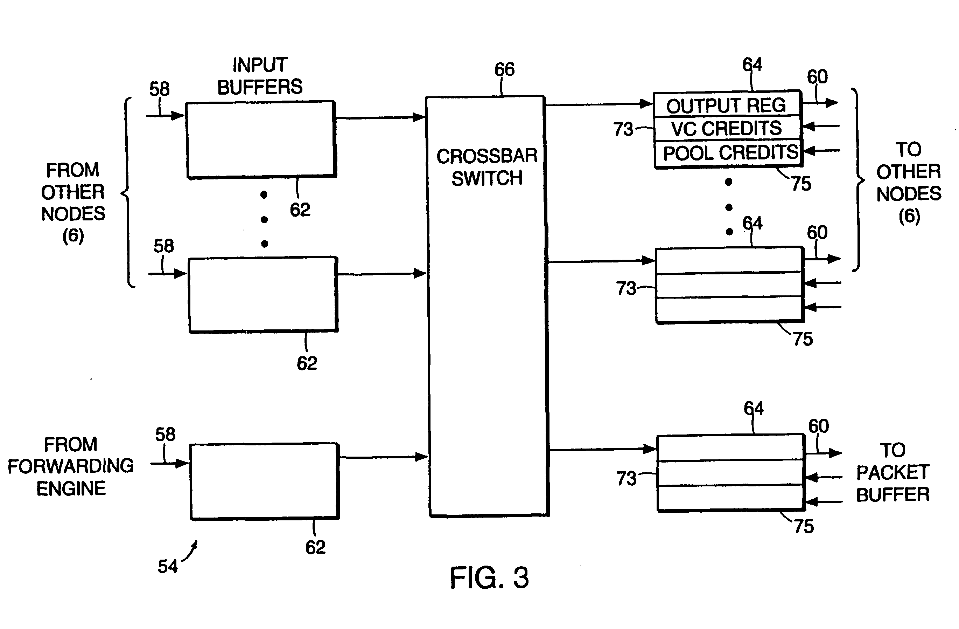

A fabric router used to forward a packet over the switch fabric from the module associated with its input link to the module associated with its output link is illustrated in Figure 3. The router has seven input links 58 and seven output links 60. Six of the links connect to adjacent nodes in the 3-D torus network of Figure 2. The seventh input link accepts packets from the forwarding engine 50 and the seventh output link sends packets to the packet output buffer 52 in this router's line interface module. Each input link 58 is associated with an input buffer array 62 and each output link 60 is associated with an output register 64. The input buffers and output registers are connected together by a 7 x 7 crossbar switch 66. A virtual network is provided for each pair of output nodes, and each of the-seven input buffer arrays 62 contains, for example, four flit buffers for each virtual network in the machine.

If a virtual channel of a fabric router destined for an output node is free when the head flit of a packet arrives for that virtual channel, the channel is assigned to that packet for the duration of the packet, that is, until the tail flit of the packet passes. However, multiple packets may be received at a router for the same virtual channel through multiple inputs. If a virtual channel is already assigned, the new head flit must wait in its flit buffer. If the channel is not assigned, but two head flits for that channel arrive together, a fair arbitration must take place. Until selected in the fair arbitration process, flits remain in the input buffer, backpressure being applied upstream.

Once assigned an output virtual channel, a flit is not enabled for transfer across a link until a signal is received from the downstream node that an input buffer at that node is available for the virtual channel.

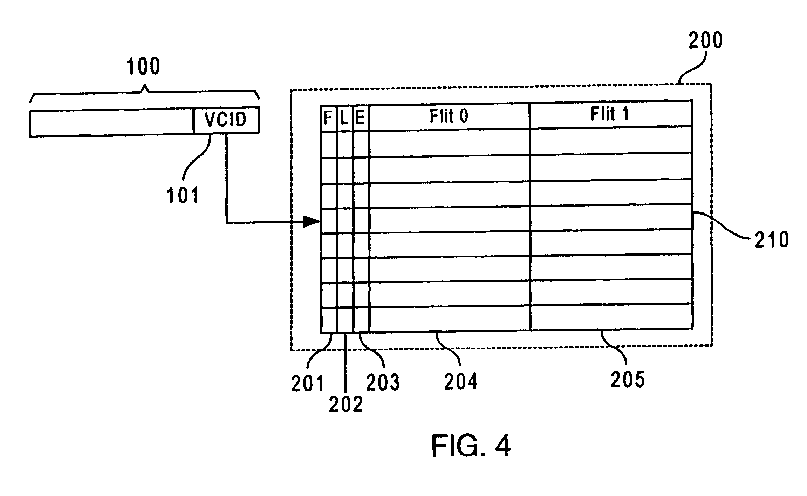

Prior routers have used a buffer organization, illustrated in Figure 4, in which each flit buffer is assigned to a particular virtual channel and cannot be used to hold flits associated with any other virtual channel. Figure 4 shows an arriving flit, 100, and the flit buffer array for one input port of a router, 200. The buffer array 200 contains one row for each virtual channel supported by the router. Each row contains S = 2 flit buffers 204 and 205, a pointer to the first flit in the row (F) 201, a pointer to the last flit in the row (L) 202, and an empty bit (E) 203 that indicates when there are no flits in the row.

When flit 100 arrives at the input channel, it is stored in the flit buffer at a location determined by the virtual channel identifier (VCID) field of the flit 101 and the L-field of the selected row of the flit buffer. First, the VCID is used to address the buffer array 200 to select the row 210 associated with this virtual channel. The L-field for this row points to the last flit placed in the buffer. It is incremented to identify the next open flit buffer into which the arriving flit is stored. When a particular virtual channel of the input channel is selected to output a flit, the flit buffer to be read is selected in a similar manner using the VCID of the virtual channel and the F field of the corresponding row of the buffer array.

Simulations have shown that, for typical traffic, only a small fraction of the virtual channels of a particular input port are occupied at a given time. We can exploit this behavior by providing only a small pool of buffers on chip with a full array of buffers in slower, but less expensive, off-chip storage. The buffers in the pool are dynamically assigned to virtual channels so that at any instant in time, these buffers hold flits for the fraction of virtual channels that are in use. The buffer pool is, in effect, a cache for the full array of flit buffers in off-chip storage. A simple router ASIC with an inexpensive external DRAM memory can simultaneously support large numbers of virtual channels and large buffers for each virtual channel. In a preferred embodiment there are V = 2560 virtual channels, each with S = 4 flits with each flit occupying F = 576-bit flits of storage.

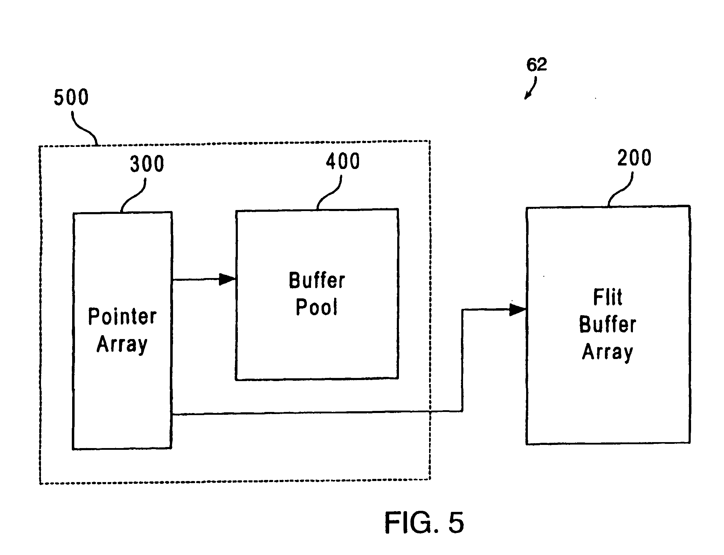

A first preferred embodiment of the present invention is illustrated in Figure 5. A relatively small pool of flit buffers 400 is used to hold the currently active set of flits on router chip 500. The complete flit buffer array 200 is placed in inexpensive off-chip memory and holds any flits that exceed the capacity of the pool. A pointer array 300 serves as a directory to hold the state of each virtual channel and to indicate where each flit associated with the virtual channel is located.

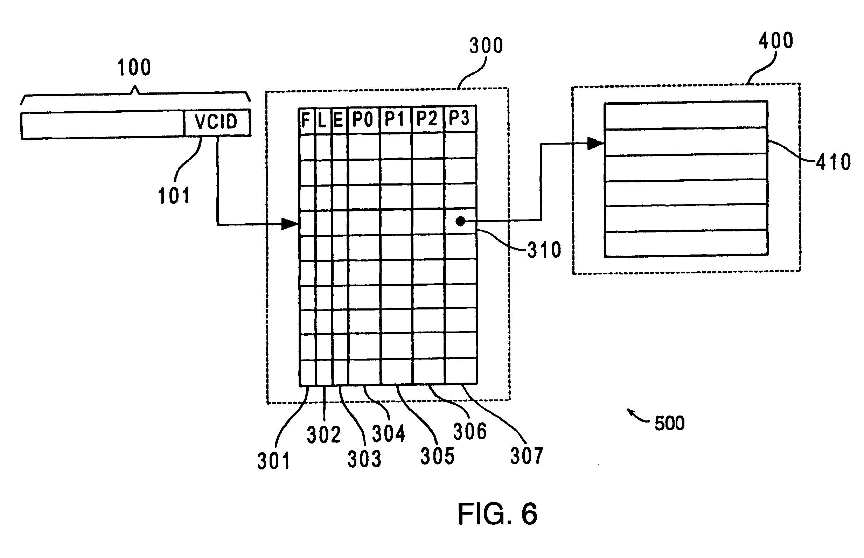

A more detailed view of pointer array 300 and buffer pool 400 is shown in Figure 6. The pointer array 300 contains one row per virtual channel. Each row contains three state fields and S pointer fields. In this example, S = 4. The F-field 301 indicates which of the S = 4 pointer fields corresponds to the first flit on the channel. The L-field 302 indicates which pointer field corresponds to the last flit to arrive on the channel, and the E-field 303 if set indicates that the channel is empty and no flits are present.

Each pointer field, if in use, specifies the location of the corresponding flit. If the value of the pointer field, P, is in the range [0,B-1], where B is the number of buffers in the buffer pool, then the flit is located in buffer P of buffer pool 400. On the other hand, if P = B the pointer indicates that the corresponding flit is located in the off-chip flit-buffer array. Flits in the off-chip flit buffer array are located by VCID and flit number, not by pointer.

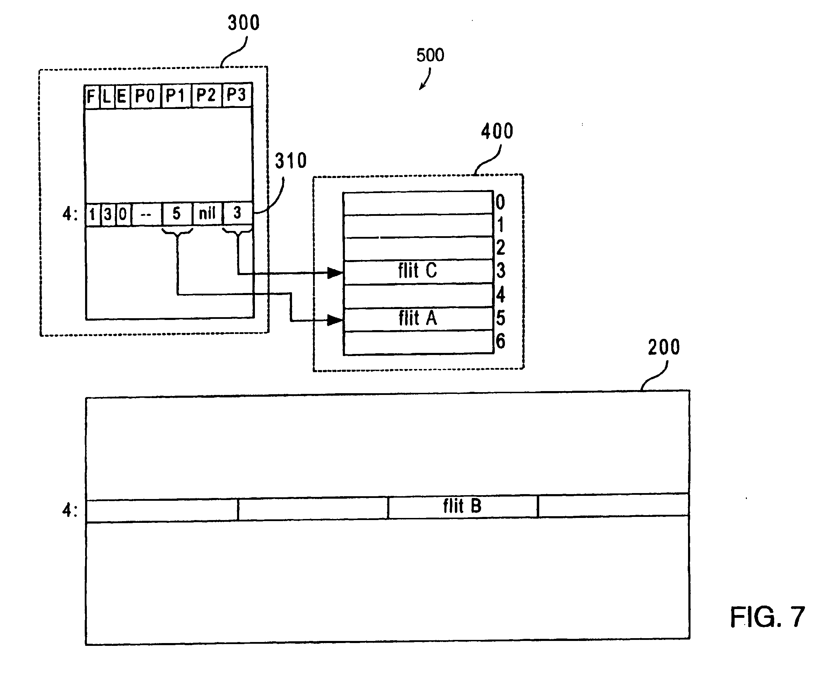

The use of this structure is illustrated in the example of Figure 7. The figure shows the entries in pointer array 300, buffer pool 400, and off-chip buffer array 200 for a single virtual channel (VCID = 4) that contains three flits. Two of these flits, the first and the last, are in the buffer pool while the middle flit is in the off-chip buffer array. To locate a particular flit, the VCID is used to select row 310 within pointer array 300. The state fields within the selected row specify that three flits are in the collective buffer with the first flit identified by pointer 1 (F=1) and the last flit identified by pointer 3 (L=3). Pointer 2 identifies the middle flit. Pointer 1 contains the value 5, which specifies that the first flit is in location 5 of buffer pool 400. Similarly, pointer 3 specifies that the last flit is in location 3 of buffer pool 400. Pointer 2, however, contains the value nil which indicates that the middle flit resides in the off-chip buffer array 200, at row 4 column 2. The row is determined by the VCID, in this case 4, and the column by the position of the pointer, pointer 2 in this example. In a preferred embodiment, the buffer pool contains 2n-1 buffers labeled 0 to 2n-2 for some n and the value 2n-1 denotes the nil pointer.

To see the advantage of flit buffer caching, consider our example system with V = 2560 virtual channels each with S = 4 flit buffers containing F = 576-bit flits. A conventional buffer organization (Figure 4) requires V x S x F = 5,898,240 bits of storage for each input channel of the router. Using an on-chip buffer pool with P = 255 buffers in combination with an off-chip buffer array (Figure 5), on the other hand requires a P x F = 146,880-bit buffer pool and a 37 x V = 94,720-bit pointer array for a total of 241,600 bits of on-chip storage per input channel. A 5,898,240-bit off-chip buffer array is also required. This represents a factor of 24 reduction in on-chip storage requirements.

The input channel controller uses a dual-threshold buffer management algorithm to ensure an adequate supply of buffers in the pool. Whenever the number of free buffers in the pool falls below a threshold, e.g., 32, the channel controller begins evicting flits from the buffer pool 400 to the off-chip buffer array 200 and updating pointer array 300 to indicate the change. Once flit eviction begins, it continues until the number of free buffers in the pool exceeds a second threshold, e.g., 64. During eviction, the flits to be evicted can be selected using any algorithm: random, first available, or least recently used. While an LRU algorithm gives slightly higher performance, the eviction event is so rare that the simplest possible algorithm suffices. The eviction process is necessary to keep the upstream controller from waiting indefinitely for a flit to depart from the buffer. Without eviction, this waiting would create dependencies between unrelated virtual channels, possibly leading to tree saturation or deadlock.

Prior routers, such as the one described in the above mentioned pending PCT application, employ credit-based flow control where the upstream controller keeps a credit count 73 (Figure 3), a count of the number of empty flit buffers, for each downstream virtual channel. The output-controller only forwards a flit for a particular virtual channel when it has a non-zero credit count for that VC, indicating that there is a flit-buffer available downstream. Whenever the upstream controller forwards a flit, it decrements the credit count for the corresponding VC. When the downstream controller empties a flit-buffer, it transmits a credit upstream. Upon receipt of each credit, the upstream controller increments the credit count for the corresponding VC.

With flit-buffer caching, the upstream output channel controller flow-control strategy must be modified to avoid oversubscribing this bandwidth in the unlikely event of a buffer-pool overflow. This additional flow control is needed because the off-chip buffer array has much lower bandwidth than the on-chip buffer pool and than the channel itself. Once the pool becomes full, flits must be evicted to the off-chip buffer array and transfers from all VCs must be blocked until space is available in the pool. To handle flit-buffer caching, the prior credit-based flow control mechanism is augmented by adding a buffer-pool credit count 75 that reflects the number of empty buffers in the downstream buffer pool. The upstream controller must have both a non-zero credit count 73 for the virtual channel and a non-zero buffer-pool credit count 75 before it can forward a flit downstream. This ensures that there is space in the buffer pool for all arriving flits. Initially, maximum counts are set for all virtual channels and for the buffer pool which is shared by all VCs. Each time the upstream controller forwards a flit it decrements both the credit count for the corresponding VC and the shared buffer-pool credit count. When the downstream controller sends a credit upstream for any VC, it sets a pool bit in the credit if the flit being credited was sent from the buffer pool. When the upstream controller receives a credit with the pool bit set, it increments the buffer-pool credit count as well as the VC credit count. With eviction of flits from the buffer pool to the off-chip buffer array, special pool-only credit is sent to the upstream controller to update its credit-count to reflect the change. Thus, transfer of new flits is stopped only while transferring flits between the buffer pool and the off-chip buffer array.

Alternatively, blocking flow control can be employed to prevent pool overrun rather than credit-based flow control. With this approach, a block bit in all upstream credits is set when the number of empty buffers in the buffer pool falls below a threshold. When this bit is set, the upstream output controller is inhibited from sending any flits downstream. Once the number of empty buffers is increased over the threshold, the block bit is cleared and the upstream controller may resume sending flits. Blocking flow control is advantageous because it does not require a pool credit counter in the upstream controller and because it can be used to inhibit flit transmission for other reasons.

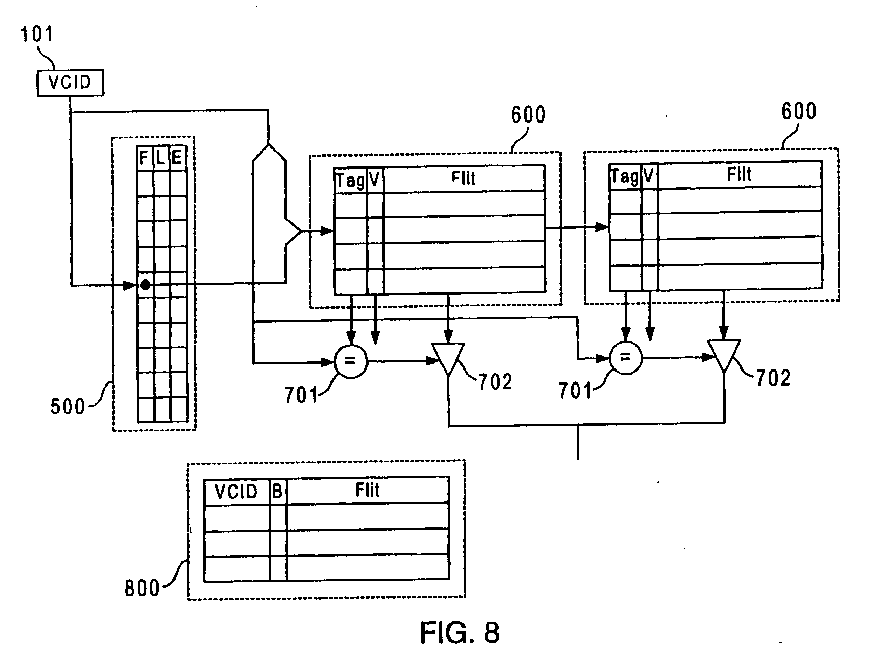

An alternative preferred embodiment dispenses with the pointer array and instead uses a set-associative cache organization as illustrated in Figure 8. This organization is comprised of a state array 500, one or more cache arrays 600, and an eviction FIFO 800. An off-chip buffer array 200 (not shown) is also employed to back up the cache arrays. A flit associated with a particular buffer, B, of a particular virtual channel, V, is mapped to a possible location in each of the cache arrays in a manner similar to a conventional set-associative cache (see, for example Hennessey and Patterson, Computer Architecture: A Quantitative Approach, Second Edition, Morgan Kaufmann, 1996, Chapter 5). The flit stored at each location is then recorded in an associated cache tag. A valid bit in each cache location signals if the entry it contains represents valid data.

The allowed location for a particular flit F={V:B} in the cache is determined by the low order bits of F. For example, consider a case with V = 2560 virtual channels, S= 4 buffers per virtual channel, and C = 128 entries in each of A = 2 cache arrays. In this case, the flit identifier F is 14-bits, 12-bits of VCID, and 2-bits of buffer identifier, B. The seven-bit cache array index is constructed by appending B to the low-order 5-bits of V, I = {V[4:0]:B}. The remaining seven high-order bits of V are then used for the cache tag, T = V[11:5].

When a flit arrives over the channel, its VCID is used to index the state array 500 to read the L field. This field is then incremented to determine the buffer location, B, within the virtual channel, into which the flit is to be stored. The array index, I, is then formed by concatenating B with the low 5-bits of the VCID and this index is used to access the cache arrays 600. While two cache arrays are shown, it is understood that any number of arrays may be employed. One of the cache arrays is then selected to receive this flit using a selection algorithm. Preference may be given to an array that contains an invalid entry in this location, or, if all entries are valid, the array that contains the location that has been least recently used. If the selected cache array already contains a valid flit, this flit is first read out into the eviction FIFO 800 along with its identity (VCID and B). The arriving flit is then written into the vacated location, the tag on that location is updated with the high-bits of the VCID, and the location is marked valid.

When a request comes to read the next flit from a particular virtual channel, the VCID is again used to index the state array 500, and the F field is read to determine the buffer location, B, to be read. The F field is then incremented and written back to the state array. The VCID and buffer number, B, are then used to search for the flit in three locations. First, the index is formed as above I = {V[4:0],B} and the cache arrays are accessed. The tag accessed from each array is compared to V[11:5] using comparator 701. If there is a match and the valid bit is set, then the flit has been located and is read out of the corresponding array via tri-state buffer 702. The valid bit of the entry containing the flit is then cleared to free this entry for later use.

If the requested flit is not found in any of the cache arrays, the eviction FIFO is then searched to determine if it contains a valid entry with matching VCID and B. If a match is found, the flit is read out of the eviction FIFO and the valid bit of the entry is cleared to free the location. Finally, if the flit is not found in either the cache arrays or the eviction FIFO, off-chip flit array 200 is read at location {V[11:0],B} to retrieve the flit from backing store.

As with the first preferred embodiment, flow control must be employed and eviction performed to make sure that requests from the upstream controller do not overrun the eviction FIFO. Either credit-based or blocking flow control can be employed as described above to prevent the upstream controller from sending flits when free space in the eviction FIFO falls below a threshold. Flits from the eviction FIFO are also written back to the off-chip flit array 200 when this threshold is exceeded.

Compared to the first preferred embodiment, the set associative organization requires fewer on-chip memory bits to implement but is likely to have a lower hit rate due to conflict misses. For the example numbers above, the state array requires 2560 x 5 = 12,800 bits of storage, and cache arrays with 256 flit-sized entries requires 256 x (576 + 1 + 7) = 149,504 bits, and an eviction FIFO with 16 entries requires 16 x (576 + 14) = 9,440 bits for a total of 171,744 bits compared to 241,600 bits for the first preferred embodiment.

Conflict misses occur because a flit cannot reside in any flit buffer, but rather only in a single location of each array (a set of buffers). Thus, an active flit may be evicted from the array before all buffers are full because several other flits map to the same location. However, the effect of these conflict misses are mitigated somewhat by the associative search of the eviction FIFO which acts as a victim cache (see Jouppi, "Improving Direct Mapped Cache Performance by the Addition of a Small Fully-Associative Cache and Prefetch Buffers," Proceedings of 17th Annual International Symposium on Computer Architecture, 1990, pp 364-375.

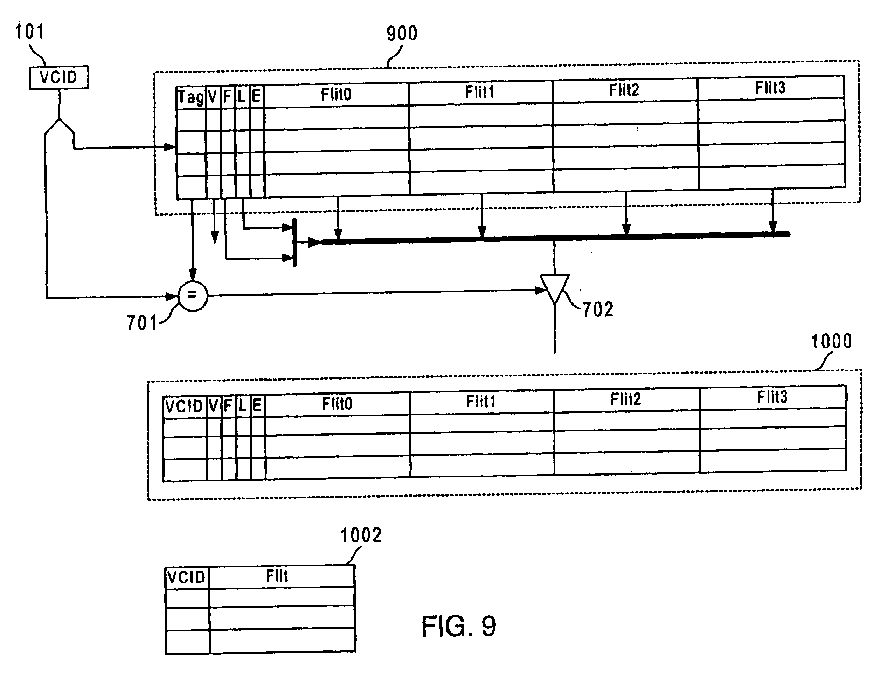

The storage requirements of a flit-cache can be reduced further using a third preferred embodiment illustrated in Figure 9. This embodiment also employs set-associative cache organization. However, unlike the embodiment of Figure 8, it places all of the state and buffers associated with a given virtual channel into a single cache entry of array 900. While a single cache array 900 is shown (a direct-mapped organization), one skilled in the art will understand that any number of cache arrays may be employed. Placing all of the state in the cache arrays eliminates the need for state array 500. The eviction FIFO 1000 for this organization also contains all state and buffers for a virtual channel (but does not need a B field). Similarly, the off-chip flit array 200 (not shown) is augmented to include the state fields (F,L, and E) for each virtual channel.

When a flit arrives at the buffer, the entry for the flit's virtual channel is located and brought on chip if it is not already there. The entry is then updated to insert the new flit and update the L field. Specifically, the VCID field of the arriving flit is used to search for the virtual channel entry in three locations. First, the cache arrays are searched by using the low bits of the VCID, e.g., V[6:0], as an index and the high bits of the VCID, e.g., V[11:7] as a tag. If the stored tag matches the presented tag and the valid bit is set, the entry has been found. In this case, the L field of the matching entry is read and used to select the location within the entry to store the arriving flit. The L entry is then incremented and written back to the entry.

In the case of a cache miss, no match in the cache arrays, one of the cache arrays is selected to receive the required entry as described above. If the selected entry is currently valid holding a different entry, that entry is evicted to the eviction FIFO 1000. The eviction FIFO is then searched for the required entry. If found, it is loaded from the buffer into the selected cache array and updated as described above. If the entry is not found in the eviction FIFO, it is fetched from the off-chip buffer array. To allow other arriving flits to be processed while waiting for an entry to be loaded from off chip, the pending flit is temporarily stored in a miss holding register (1002) until the off-chip reference is complete. Once the entry has been loaded from off-chip, the update proceeds as described above.

To read a flit out of the cache given a VCID, the search proceeds in a manner similar to the write. The virtual channel entry is loaded into the cache, from the eviction FIFO or off-chip buffer array, if it is not already there. The F field of the entry is used to select the flit within the entry for readout. Finally, the F field is incremented and written back to the entry.

As with the other preferred embodiments, flow control, either blocking or credit-based is required to stop the upstream controller from sending flits when the number of empty locations in either the eviction FIFO or the miss holding registers fall below a threshold value.

The advantage of the third preferred embodiment is the small size of its on-chip storage arrays when there are very large numbers of virtual channels. Because there are no per-virtual-channel on-chip arrays, the size is largely independent of the number of virtual channels (the size of the tag field does increase logarithmically with the number of virtual channels). For example for our example parameters, V=2560, S=4, and F=576, an on-chip array with 64 entries (256 flits) contains 64 (((S (F) + 12) = 148,224 bits. An eviction FIFO and miss holding register array with 16 entries each add an additional 37,152 and 9,328 bits respectively. The total amount of on-chip storage, 194,704 is slightly larger than the 171,744 for the second preferred embodiment, but remains essentially constant as the number of virtual channels is increased beyond 2560.

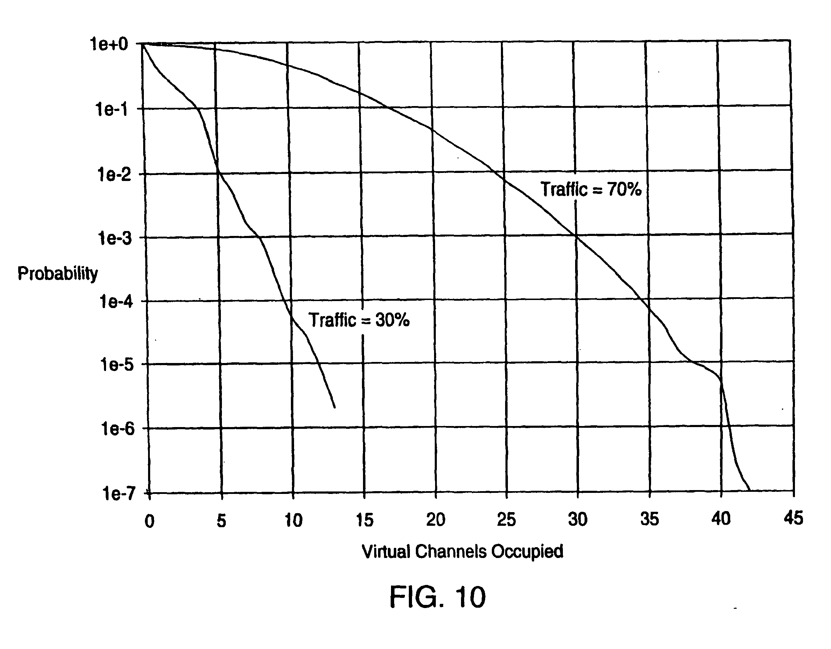

Figure 10 illustrates the effectiveness of flit buffer caching employing any of the three preferred embodiments. The figure displays the results of simulating a 512-node 8x8x8 3-dimensional torus network with traffic to each destination run on a separate virtual channel. During this simulation, the occupancy of virtual channels was recorded at each point in time. The figure shows two histograms of this channel occupancy corresponding to the network operating at 30% of its maximum capacity, a typical load, and at 70% of its maximum capacity, an extremely heavy load. Even at 70% of
capacity, the probability is less than 10⁻⁵ that more than 38 virtual channel buffers will be occupied at a given point in time. This suggests that a flit buffer cache with a capacity of 38xS flits should have a hit ratio of more than 99.999% (or conversely a miss ratio of less than 0.001%). If we extrapolate this result, it suggests that a flit buffer cache with a 256-flit capacity will have a vanishingly small miss ratio.

While we have described particular arrangements of the flit cache for the three preferred embodiments, one skilled in the art of fabric router design will understand that many alternative arrangements and organizations are possible. For example, while we have described pointer-based and set-associative organizations, one could also employ a fully-associative organization (particularly for small cache sizes), a hash table, or a tree-structured cache. While we have described cache block sizes of one flit and one virtual channel, other sizes are possible. Also, while we have described a particular encoding of virtual-channel state with the fields F, L, and E, many other encodings are possible. Moreover, while we have cached only the contents of flits and the input virtual channel state, the caching could be extended to cache the output port associated with a virtual channel and the output virtual channel state.

While this invention has been particularly shown and described with references to preferred embodiments thereof, it will be understood by those skilled in the art that various changes in form and details may be made therein within the scope of the invention as defined by the appended claims. For example, though the preferred embodiments provide flit buffers in fabric routers, the invention can be extended to other information units, such as packets and messages, in other routers.

## Claims

1. A router including buffers for information units transferred through the router, the router comprising a first set of rapidly accessible buffers (500) for the information units and a second set of buffers (700) for the information units that are accessed more slowly than the first set; **characterized by**:
each information unit received at a port being stored in a buffer assigned to only one of plural virtual channels;
the rapidly accessible buffers being shared by multiple virtual channels by dynamic assignment to virtual channels, the number of rapidly accessible buffers being substantially less than the number of buffers required for all virtual channels; and
the number of buffers in the second set of buffers assigned to virtual channels being substantially greater than the available number of rapidly accessible buffers.

2. A router as claimed in claim 1 wherein:
the router is implemented on one or more integrated circuit chips;
the first set of buffers is located on the router integrated circuit chips; and
the second set of buffers is located on memory chips separate from the router integrated circuit chips.

3. A router as claimed in claim 1 where the second set of buffers holds information units for a complete set of virtual channels.

4. A router as claimed in claim 1 wherein the first set of buffers comprises:
a buffer pool (400); and
a pointer array (300) with pointers to buffered information units associated with individual virtual channels in both the first and second sets of buffers.

5. A router as claimed in claim 1 wherein the first set of buffers is organized as a set-associative cache.

6. A router as claimed in claim 5 wherein each entry in the set associative cache contains a single information unit.

7. A router as claimed in claim 5 wherein each entry in the set associative cache contains the buffers and state for an entire virtual channel.

8. A router as claimed in claim 1 further comprising flow control to stop the arrival of new information units while transferring information units between the first set of buffers and the second set of buffers.

9. A router as claimed in claim 8 wherein the flow control is blocking.

10. A router as claimed in claim 8 wherein the flow control is credit-based.

11. A router as claimed in claim 1 further comprising miss status registers to hold information units waiting for access to the second set of buffers.

12. A router as claimed in claim 1 further comprising an eviction buffer to hold entries staged for transfer from the first set of buffers to the second set of buffers.

13. The use of a router as claimed in claim 1 in a multicomputer interconnection network.

14. The use of a router as claimed in claim 1 in a network switch or router.

15. A router as claimed in claim 1 wherein the router is a fabric router within a fabric of routers in a higher level switch or router and the information units are flits.

16. A method of buffering information units in a router, comprising storing the information units in a first set of rapidly accessible buffers and a second set of buffers that are accessed more slowly than the first set, **characterized by**:
each information unit received at a port being stored in a buffer assigned to only one of plural virtual channels;
the readily accessible buffers being shared by multiple virtual channels by dynamic assignment to virtual channels, the number of rapidly accessible buffers being substantially less than the number of buffers required for all virtual channels; and
overflow from the first set of buffers being stored in the second set of buffers, the number of buffers in the second set assigned to virtual channels being substantially greater than the available number of rapidly accessible buffers.

17. Use of a router according to any of claims 2 to 15 in a method ofbuffering information units according to claim 16.

18. A network comprising a plurality of interconnected routers, each router including information un it buffers, the router comprising a first set of rapidly accessible information unit buffers and a second set of information unit buffers that are accessed more slowly than the first set, **characterized by**:
each information unit received at a port being stored in a buffer assigned to only one of plural virtual channels;
the readily accessible buffers being shared by multiple virtual channels by dynamic assignment to virtual channels, the number of rapidly accessible buffers being substantially less than the number of buffers required for all virtual channels; and
the number of buffers in the second set of buffers assigned to virtual channels being substantially greater than the available number of rapidly accessible buffers.

19. Use of a router according to any one of claims 2 to 15 in a network as defined in claim 18.

## Revendications

1. Routeur comprenant des tampons destinés à des unités d'information transférées à travers le routeur, le routeur comprenant un premier ensemble de tampons à accès rapide (500) destinés aux unités d'information et un second ensemble de tampons (700) destinés aux unités d'information auxquels on accède plus lentement qu'au premier ensemble, **caractérisé par :**
**le fait que** chaque unité d'information reçue au niveau d'un port est stockée dans un tampon qui n'est affecté qu'à un seul parmi plusieurs canaux virtuels ;
**le fait que** les tampons à accès rapide sont partagés par plusieurs canaux virtuels grâce à une affectation dynamique aux canaux virtuels, le nombre des tampons à accès rapide étant essentiellement inférieur au nombre de tampons nécessaires pour tous les canaux virtuels ; et
**le fait que** le nombre de tampons dans le second ensemble de tampons affectés aux canaux virtuels est essentiellement supérieur au nombre disponible de tampons à accès rapide.

2. Routeur selon la revendication 1 dans lequel :
le routeur est réalisé dans un ou plusieurs boîtiers de circuits intégrés ;
le premier ensemble de tampons est situé dans les boîtiers de circuits intégrés du routeur ; et
le second ensemble de tampons est situé dans des boîtiers mémoire distincts des boîtiers de circuits intégrés du routeur.

3. Routeur selon la revendication 1 où le second ensemble de tampons détient des unités d'information pour un ensemble complet de canaux virtuels.

4. Routeur selon la revendication 1 dans lequel le premier ensemble de tampons comprend :
un groupe de tampons (400) ; et
une zone de pointeurs (300) avec des pointeurs vers les unités d'information stockées en tampon associées aux canaux virtuels individuels à la fois dans les premier et second ensemble de tampons.

5. Routeur selon la revendication 1 dans lequel le premier ensemble de tampons est organisé en cache à ensembles associatifs.

6. Routeur selon la revendication 5 dans lequel chaque entrée dans le cache à ensembles associatifs contient une seule unité d'information.

7. Routeur selon la revendication 5 dans lequel chaque entrée dans le cache à ensembles associatifs contient les tampons et état pour un canal virtuel entier.

8. Routeur selon la revendication 1 comprenant de plus un contrôle de flux pour arrêter l'arrivée de nouvelles unités d'information pendant le transfert d'unités d'information entre le premier ensemble de tampons et le second ensemble de tampons.

9. Routeur selon la revendication 8 dans lequel le contrôle de flux est bloquant.

10. Routeur selon la revendication 8 dans lequel le contrôle de flux est basé sur un crédit.

11. Routeur selon la revendication 1 comprenant de plus des registres d'état de non-correspondance pour détenir des unités d'information qui attendent pour accéder au second ensemble de tampons.

12. Routeur selon la revendication 1 comprenant de plus un tampon d'expulsion pour détenir des entrées échelonnées pour un transfert du premier ensemble de tampons vers le second ensemble de tampons.

13. Utilisation d'un routeur selon la revendication 1 dans un réseau d'interconnexion multiordinateur.

14. Utilisation d'un routeur selon la revendication 1 dans un commutateur réseau ou un routeur.

15. Routeur selon la revendication 1 dans lequel le routeur est un routeur de structure à l'intérieur d'une structure de routeurs dans un commutateur ou un routeur de plus haut niveau et où les unités d'information sont des échanges rapides.

16. Procédé de stockage d'unités d'information dans un routeur, comprenant le fait de stocker les unités d'information dans un premier ensemble de tampons à accès rapide et un second ensemble de tampons auxquels on accède plus lentement qu'au premier ensemble, **caractérisé par :**
**le fait que** chaque unité d'information reçue au niveau d'un port est stockée dans un tampon qui n'est affecté qu'à un seul parmi plusieurs canaux virtuels ;
**le fait que** les tampons facilement accessibles sont partagés par plusieurs canaux virtuels grâce à une affectation dynamique aux canaux virtuels, le nombre des tampons à accès rapide étant essentiellement inférieur au nombre de tampons nécessaires pour tous les canaux virtuels ; et
**le fait que** le débordement du premier ensemble de tampons est stocké dans le second ensemble de tampons, le nombre de tampons dans le second ensemble affectés aux canaux virtuels étant essentiellement supérieur au nombre disponible de tampons à accès rapide.

17. Utilisation d'un routeur selon l'une quelconque des revendications 2 à 15 dans un procédé de stockage d'unités d'information selon la revendication 16.

18. Réseau comprenant une pluralité de routeurs interconnectés, chaque routeur comprenant des tampons d'unité d'information, le routeur comprenant un premier ensemble de tampons d'unité d'information à accès rapide et un second ensemble de tampons d'unité d'information auxquels on accède plus lentement qu'au premier ensemble, **caractérisé par :**
**le fait que** chaque unité d'information reçue au niveau d'un port est stockée dans un tampon qui n'est affecté qu'à un seul parmi plusieurs canaux virtuels ;
**le fait que** les tampons facilement accessibles sont partagés par plusieurs canaux virtuels grâce à une affectation dynamique aux canaux virtuels, le nombre des tampons à accès rapide étant essentiellement inférieur au nombre de tampons nécessaires pour tous les canaux virtuels ; et
**le fait que** le nombre de tampons dans le second ensemble de tampons affectés aux canaux virtuels est essentiellement supérieur au nombre disponible de tampons à accès rapide.

19. Utilisation d'un routeur selon l'une quelconque des revendications 2 à 15 dans un réseau selon la revendication 18.

## Patentansprüche

1. Router mit Zwischenspeichern für Informationseinheiten, die durch den Router übertragen werden, wobei der Router einen ersten Satz von schnell zugreifbaren Zwischenspeichern (500) für die Informationseinheiten und einen zweiten Satz von Zwischenspeichern (700) für die Informationseinheiten, auf die langsamer als auf den ersten Satz zugegriffen wird, aufweist;
**dadurch gekennzeichnet, dass**:
jede an einem Anschluss empfangene Informationseinheit in einem Zwischenspeicher gespeichert wird, der lediglich einem von mehreren virtuellen Kanälen zugeordnet ist;
die schnell zugreifbaren Zwischenspeicher von einer Vielzahl von virtuellen Kanälen mittels dynamischer Zuordnung zu virtuellen Kanälen gemeinsam benutzt werden, wobei die Anzahl der schnell zugreifbaren Zwischenspeicher wesentlich geringer ist als die Anzahl der für alle virtuellen Kanäle erforderlichen Zwischenspeicher; und
die Anzahl der Zwischenspeicher in dem zweiten Satz von Zwischenspeichern, die den virtuellen Kanälen zugeordnet sind, wesentlich größer ist als die verfügbare Anzahl von schnell zugreifbaren Zwischenspeichern.

2. Router nach Anspruch 1, wobei:
der Router auf einem oder mehreren integrierten Schaltungschips implementiert ist;
der erste Satz von Zwischenspeichern auf den integrierten Router-Schaltungschips angeordnet ist; und
der zweite Satz von Zwischenspeichern auf Speicherchips angeordnet ist, die getrennt von den integrierten Router-Schaltungschips sind.

3. Router nach Anspruch 1, wobei der zweite Satz von Zwischenspeichern Informationseinheiten für einen vollständigen Satz von virtuellen Kanälen enthält.

4. Router nach Anspruch 1, wobei der erste Satz von Zwischenspeichern aufweist;
einen Zwischenspeicher-Pool (400); und
ein Zeiger-Array (300) mit Zeigern auf die zwischengespeicherten Informationseinheiten, die sowohl im ersten als auch im zweiten Satz von Zwischenspeichern mit individuellen virtuellen Kanälen verbunden sind.

5. Router nach Anspruch 1, wobei der erste Satz von Zwischenspeichern als ein Satz-assoziativer (set-associative) Cache-Speicher organisiert ist.

6. Router nach Anspruchs, wobei jeder Eintrag im Satzassoziativen Cache-Speicher eine einzelne Informationseinheit enthält.

7. Router nach Anspruch 5, wobei jeder Eintrag im Satzassoziativen Cache-Speicher die Zwischenspeicher und den Status für einen gesamten virtuellen Kanal enthält.

8. Router nach Anspruch 1, der weiterhin eine Flusssteuerung aufweist, um die Ankunft neuer Informationseinheiten zu stoppen, während Informationseinheiten zwischen dem ersten Satz von Zwischenspeichern und dem zweiten Satz von Zwischenspeichern übertragen werden.

9. Router nach Anspruch 8, wobei die Flusssteuerung ein Sperren ist.

10. Router nach Anspruch 8, wobei die Flusssteuerung kreditabhängig ist.

11. Router nach Anspruch 1, der des Weiteren Fehlzustandsregister aufweist, um Informationseinheiten zu enthalten, die auf Zugriff auf den zweiten Satz von Zwischenspeichern warten.

12. Router nach Anspruch 1, der weiterhin einen Räumungszwischenspeicher aufweist, um Einträge zu enthalten, die für den Transfer vom ersten Satz von Zwischenspeichern zum zweiten Satz von Zwischenspeichern bereitgestellt sind.

13. Verwendung eines Routers nach Anspruch 1 in einem Multicomputer-Verbindungsnetz.

14. Verwendung eines Routers nach Anspruch 1 in einem Netzwerk-Switch oder -Router.

15. Router nach Anspruch 1, wobei der Router ein Netzgewebe-Router innerhalb eines Netzgewebes von Routern in einem übergeordneten Switch oder Router ist und die Informationseinheiten Flits sind.

16. Verfahren zum Zwischenspeichern von Informationseinheiten in einem Router, das das Speichern der Informationseinheiten in einem ersten Satz von schnell zugreifbaren Zwischenspeichern und in einem zweiten Satz von Zwischenspeichern, auf die langsamer als auf den ersten Satz zugegriffen wird, aufweist, **dadurch gekennzeichnet, dass**:
jede an einem Anschluss empfangene Informationseinheit in einem Zwischenspeicher gespeichert wird, der lediglich einem von mehreren virtuellen Kanälen zugeordnet ist;
die leicht zugreifbaren Zwischenspeicher von einer Vielzahl von virtuellen Kanälen durch dynamische Zuordnung zu virtuellen Kanälen gemeinsame benutzt werden, wobei die Anzahl der schnell zugreifbaren Zwischenspeicher wesentlich geringer ist als die Anzahl der Zwischenspeicher, die für alle virtuellen Kanäle erforderlich ist; und
Überlauf vom ersten Satz von Zwischenspeichern im zweiten Satz von Zwischenspeichern gespeichert wird, wobei die Anzahl der Zwischenspeicher im zweiten Satz, die virtuellen Kanälen zugeordnet sind, wesentlich größer ist als die verfügbare Anzahl der schnell zugreifbaren Zwischenspeicher.

17. Verwendung eines Routers nach einem der Ansprüche 2 bis 15 in einem Verfahren zum Zwischenspeichern von Informationseinheiten nach Anspruch 16.

18. Netzwerk mit einer Vielzahl von verbundenen Routern, wobei jeder Router Informationseinheitszwischenspeicher aufweist, wobei der Router einen ersten Satz von schnell zugreifbaren Informationseinheitszwischenspeichern und einem zweiten Satz von Informationseinheitszwischenspeichern aufweist, auf die langsamer zugegriffen wird als auf den ersten Satz,
**dadurch gekennzeichnet, dass**:
jede an einem Anschluss empfangene Informationseinheit in einem Zwischenspeicher gespeichert wird, der lediglich einem von vielen virtuellen Kanälen zugeordnet ist;
die leicht zugreifbaren Zwischenspeicher von einer Vielzahl von virtuellen Kanälen durch dynamische Zuordnung zu virtuellen Kanälen gemeinsam benutzt werden, wobei die Anzahl der schnell zugreifbaren Zwischenspeicher wesentlich geringer ist als die Anzahl der Zwischenspeicher, die für alle virtuellen Kanäle erforderlich ist; und
die Anzahl der Zwischenspeicher in dem zweiten Satz von Zwischenspeichern, die zu virtuellen Kanälen zugeordnet sind, wesentlich größer ist als die verfügbare Anzahl von schnell zugreifbaren Zwischenspeichern.

19. Verwendung eines Routers nach einem der Ansprüche 2 bis 15 in einem Netzwerk nach Anspruch 18.
